# FASCICULE DE BREVET EUROPEEN

(11) **EP 4 225 589 B1**
(45) Date de publication et mention de la délivrance du brevet: **12.03.2025**
(21) Numéro de dépôt: 21799313.8
(22) Date de dépôt: 07.10.2021
(51) Int. Cl.: B60C 9/18, B60C 11/03, B60C 9/02

(54) **PNEUMATIQUE POUR JANTE MINI**
MINIFELGENREIFEN
MINI RIM TYRE

(30) Priorité: 09.10.2020 FR 2010355; 09.10.2020 FR 2010356; 09.10.2020 FR 2010359
(43) Date de publication de la demande: 16.08.2023
(73) Titulaire: COMPAGNIE GENERALE DES ETABLISSEMENTS MICHELIN, 63040 Clermont-Ferrand (FR)
(72) Inventeur: DUCHEMIN, Sylvie, 63040 CLERMONT-FERRAND CEDEX 9 (FR); GUIMARD, Bruno, 63040 CLERMONT-FERRAND CEDEX 9 (FR); MOUREAU, Pierre, 63040 CLERMONT-FERRAND CEDEX 9 (FR)
(74) Mandataire: M.F.P. Michelin
(86) Numéro de dépôt international: PCT/FR2021/051746
(87) Numéro de publication internationale: WO 2022/074344

(56) Documents cités:
- EP-A1- 0 812 708
- EP-A2- 1 201 462
- CONTINENTAL: "Reifen-Ratgeber 2020 - 2021 Pkw 4x4 Van", 2 October 2020 (2020-10-02), pages 1 - 67, XP002802795, Retrieved from the Internet <URL:https://blobs.continental-tires.com/www8/servlet/blob/378072/a643666b05e1d295e3d4a7da126a33d6/reifen-ratgeber-pkw-2020-2021-data.pdf> [retrieved on 20210426]

## Description

La présente invention concerne un pneumatique. Par pneumatique, on entend un bandage destiné à former une cavité en coopérant avec un support de montage, cette cavité étant apte à être pressurisée à une pression supérieure à la pression atmosphérique. Un pneumatique selon l'invention présente une structure de forme sensiblement toroïdale de révolution autour d'un axe principal du pneumatique.

L'avènement des véhicules de tourisme à motorisation électrique ou hybride entraine une augmentation du poids des véhicules, notamment en raison des batteries dont le poids est relativement important et sensiblement proportionnel à l'autonomie des véhicules. Ainsi, par exemple, pour augmenter l'autonomie d'un véhicule électrique, il est nécessaire d'augmenter la taille des batteries et par conséquent, le poids du véhicule.

De façon simple, on estime aujourd'hui qu'un kilomètre d'autonomie d'un moteur électrique conduit à augmenter le poids du véhicule d'un kilogramme. Ainsi, afin d'atteindre une autonomie de 500 kilomètres, il est nécessaire d'augmenter le poids d'un véhicule à motorisation thermique d'environ 500 kg. Afin d'équiper de tels véhicules, il est nécessaire d'utiliser des pneumatiques capables de porter une charge très élevée.

On connait de l'état de la technique un pneumatique pour véhicule de tourisme, ce pneumatique étant capable de porter une charge relativement élevée. Ce pneumatique est commercialisé sous la marque MICHELIN^{™} dans la gamme Pilot Sport 4 et présente une dimension 255/35R18. Ce pneumatique présente une version EXTRA-LOAD (en abrégé XL) au sens du manuel de la norme ETRTO 2019 et, dans cette version EXTRA-LOAD, présente un indice de charge égal à 94. Cela signifie que, à une pression de 290 kPa, le pneumatique est capable de porter une charge de 670 kg. Cette capacité de charge est relativement élevée par rapport à un pneumatique de même dimension et qualifié de STANDARD LOAD (en abrégé SL) présentant un indice de charge égal à 90 et qui est capable lui, de porter une charge de 600 kg à une pression de 250 kPa.

Afin de pouvoir être mis sur le marché, un tel pneumatique doit satisfaire des tests règlementaires. Par exemple en Europe, le pneumatique doit satisfaire à l'essai de performance charge/vitesse décrit en annexe VII du Règlement n°30 de la CEE-ONU.

Néanmoins, que ce soit dans sa version EXTRA-LOAD, et encore plus dans sa version STANDARD LOAD, un tel pneumatique n'est pas capable de porter le surplus de charge correspondant aux batteries nécessaires pour atteindre l'autonomie souhaitée. Ainsi, les manufacturiers pneumatiques ont dû proposer de nouvelles solutions afin de répondre à ce nouveau besoin.

Une solution envisagée par les manufacturiers pneumatiques est, pour un véhicule donné, l'utilisation de pneumatiques présentant une dimension plus importante ce qui permettrait de porter plus de charge. Ainsi, un véhicule donné pourrait être équipé de pneumatiques présentant un indice de charge plus élevé. Par exemple, un véhicule équipé des pneumatiques décrits ci-dessus dans leur version EXTRA LOAD pourrait être équipé de pneumatiques de dimension 275/35R19 dans leur version EXTRA-LOAD qui présentent un indice de charge égal à 100 et capable, à une pression de 290 kPa, de porter une charge de 800 kg, bien supérieure à la charge de 670 kg.

D'une part, une telle augmentation de la dimension des pneumatiques entraine nécessairement soit une réduction de l'espace intérieur du véhicule, soit un agrandissement du gabarit extérieur du véhicule, ce qui, dans les deux cas n'est pas souhaitable pour des raisons d'habitabilité et de compacité du véhicule.

D'autre part, une telle augmentation de la dimension des pneumatiques entraine une nouvelle conception du châssis du véhicule, ce qui pour des raisons évidentes de coûts, n'est pas non plus souhaitable.

Enfin, une telle augmentation de la dimension des pneumatiques, notamment de la largeur de section nominale, entraine une hausse du bruit extérieur généré par le pneumatique ainsi qu'une hausse de la résistance au roulement, ce qui n'est pas non plus souhaitable si on souhaite réduire les nuisances sonores et la consommation énergétique du véhicule.

Ainsi, une autre solution envisagée par les manufacturiers pneumatiques est, pour une dimension donnée et une version donnée d'un pneumatique, d'augmenter sa pression de gonflage. En effet, plus la pression est élevée, plus le pneumatique est capable de porter une charge élevée.

Néanmoins, l'utilisation d'une pression relativement élevée rigidifie le pneumatique et entraine une perte de confort pour les passagers du véhicule ce qui n'est évidemment pas souhaité par certains constructeurs automobiles dans les cas où le confort des passagers est prioritaire sur la charge pouvant être portée.

Un autre problème rencontré par les manufacturiers lors de la mise au point d'un pneumatique est la dissipation d'énergie et la température dans la structure que l'on peut mettre en évidence notamment dans le test décrit en annexe VII du Règlement n°30 de la CEE-ONU. En effet, en augmentant la charge appliquée à un pneumatique de façon à simuler l'ajout d'une masse correspondante aux batteries nécessaire à l'obtention de l'autonomie désirée, on a observé une augmentation importante de la dissipation d'énergie et une élévation de température aussi bien dans le bourrelet que dans l'épaule du pneumatique.

On connait de l'état de la technique des pneumatiques décrits dans EP1201462,EP0812708 et « Reifen-Ratgeber 2020-2021 PkW 4x4 Van »(continental).

L'invention a pour but de fournir un pneumatique capable de porter une charge plus importante que les pneumatiques existants sans impliquer nécessairement un accroissement de la pression du pneumatique tout en maitrisant la dissipation d'énergie et l'élévation de la température dans la structure du pneumatique sans sacrifier l'habitabilité, la compacité et le confort du véhicule.

Ainsi, l'invention a pour objet un pneumatique pour véhicule de tourisme comprenant un sommet, deux bourrelets, deux flancs reliant chacun chaque bourrelet au sommet et une armature de carcasse ancrée dans chaque bourrelet, le sommet comprenant une armature de sommet et une bande de roulement, l'armature de carcasse s'étendant dans chaque flanc et dans le sommet radialement intérieurement à l'armature de sommet, l'armature de sommet étant agencée radialement entre la bande de roulement et l'armature de carcasse et comprenant une armature de travail comprenant au moins une couche de travail axialement la moins large, la couche de travail axialement la moins large présentant une largeur axiale T2 exprimée en mm, le pneumatique étant apte à être monté sur un support de montage comprenant une jante le pneumatique présentant un indice de charge LI tel que LI ≥ LI'+1 et LI' étant l'indice de charge d'un pneumatique EXTRA LOAD présentant la même dimension selon le manuel de la norme ETRTO 2019, et lorsque le pneumatique est monté sur une jante présentant un code de largeur de jante égal au code de largeur de la jante de mesure pour la dimension du pneumatique et définie selon le manuel de la norme ETRTO 2019 minoré de 0,5, le rapport T2/A est tel que T2/A ≤ 1,00 avec A étant la largeur de jante A selon le manuel de la norme ETRTO 2019, et exprimée en mm de la jante..

Conformément à l'invention, le pneumatique est un pneumatique pour véhicule de tourisme. Un tel pneumatique est par exemple défini dans le manuel de la norme ETRTO 2019 (European Tyre and Rim Technical Organisation). Un tel pneumatique présente, généralement sur au moins un des flancs, un marquage conforme au marquage du manuel de la norme ETRTO 2019 indiquant la dimension du pneumatique sous la forme X/Y α V U β avec X désignant la largeur de section nominale, Y désignant le rapport d'aspect nominal, α désignant la structure et pouvant être R ou ZR, V désignant le diamètre de jante nominale, U désignant l'indice de charge et β désignant le symbole de vitesse.

L'indice de charge LI' est l'indice de charge d'un pneumatique présentant la même dimension, c'est-à-dire la même largeur de section nominale, le même rapport d'aspect nominal, la même structure (R et ZR étant considérée comme identique) et le même diamètre de jante nominale. L'indice de charge LI' est donné par le manuel de la norme ETRTO 2019, notamment dans la Partie intitulée Passenger Car Tyres - Tyres with Metric Designation, pages 20 à 41.

La largeur axiale de la couche de travail axialement la moins large est mesurée sur une coupe de pneumatique dans un plan méridien et correspond à la largeur selon la direction axiale entre les deux extrémités axiales de la couche de travail.

En augmentant l'indice de charge du pneumatique de l'invention par rapport à l'indice de charge d'un pneumatique présentant la même dimension dans sa version EXTRA-LOAD, l'invention permet d'augmenter la capacité de charge de l'ensemble monté comprenant le pneumatique selon l'invention et le support de montage sans pour autant modifier l'habitabilité, la compacité et le confort du véhicule sur lequel il est utilisé. En effet, la dimension du pneumatique selon l'invention étant identique à celle du pneumatique dans sa version EXTRA-LOAD, le pneumatique n'encombre pas davantage que le pneumatique dans sa version EXTRA-LOAD. Un pneumatique selon l'invention pourra porter un marquage distinctif permettant de le distinguer de sa version STANDARD LOAD et de sa version EXTRA-LOAD, par exemple un marquage du type HL (pour HIGH LOAD) ou XL+ (pour EXTRA LOAD +). Un tel marquage est notamment divulgué dans le manuel de la norme ETRTO 2021, page 3 de la section General Notes - Passenger Car tyres pour désigner des pneumatiques de type HIGH LOAD CAPACITY. Des exemples de dimensions sont également divulgués dans le manuel de la norme ETRTO 2021, page 44, paragraphe 9.1 de la section Passenger Car tyres - Tyres with metric designation.

Néanmoins, afin de maitriser les dissipations d'énergie et la température dans la structure lors du fonctionnement du pneumatique conforme à l'invention, il est nécessaire de dimensionner correctement la largeur axiale de la couche de travail axialement la moins large par rapport à la largeur de la jante. En effet, les inventeurs à l'origine de l'invention ont découvert que, dans le cas d'une forte charge au-delà de celle connue de l'état de la technique, la flèche du pneumatique, c'est-à-dire la différence entre le rayon de l'ensemble monté en absence de charge et le rayon de l'ensemble monté sous cette charge, était considérablement augmentée. Cette augmentation de la flèche entraine une dissipation d'énergie et une élévation de la température relativement importantes dans la structure du pneumatique, notamment dans le bourrelet.

Afin de maitriser cela, l'invention propose de rectifier le flanc du pneumatique, c'est-à-dire de rendre le flanc plus droit selon la direction radiale, et ce dans le but d'augmenter la rigidité radiale du pneumatique pour éviter une trop forte flexion du pneumatique et l'augmentation de la dissipation d'énergie et de la température dans la structure du pneumatique. L'invention préconise de réduire le rapport T2/A à une valeur inférieure ou égale à 1,00 afin:
- pour une largeur de jante A donnée, de réduire la largeur axiale T2 de la couche de travail axialement la moins large ce qui entraine une réduction de la largeur de l'aire de contact et donc une rectification radiale du flanc du pneumatique,
- pour une largeur axiale T2 de la couche de travail axialement la moins large donnée d'augmenter la largeur de jante A ce qui entraine également une rectification radiale du flanc du pneumatique.

Dans le cas où l'homme du métier fait varier la largeur axiale T2 de la couche de travail axialement la moins large, l'homme du métier adaptera les caractéristiques du sommet du pneumatique, notamment celles de l'armature de sommet comprenant l'armature de travail et une éventuelle armature de frettage, ainsi que celles de la bande de roulement en fonction de la largeur axiale T2 qu'il aura déterminée.

Dans les deux cas, on augmente la rigidité radiale du pneumatique, donc on réduit la flèche du pneumatique pour une charge donnée ce qui permet de compenser au moins en partie l'impact de l'augmentation de la charge et on réduit ainsi les contraintes exercées sur la structure du pneumatique et donc la dissipation d'énergie et l'élévation de température lors du fonctionnement du pneumatique.

Afin de limiter l'augmentation des masses en rotation sur le véhicule mais également afin de réduire l'encombrement de l'ensemble monté pour favoriser l'habitabilité et la compacité du véhicule, on privilégiera le fait de réduire la largeur axiale T2 de la couche de travail axialement la moins large plutôt que d'augmenter la largeur de jante A. Ainsi, l'invention nécessite que la jante présente un code de largeur de jante égal au code de largeur de la jante de mesure pour la dimension du pneumatique minoré de 0,5. On limite ainsi l'augmentation des masses en rotation sur le véhicule mais également l'encombrement de l'ensemble monté pour favoriser l'habitabilité et la compacité du véhicule. Enfin, grâce au rapport T2/A, on réduit le risque de voir le pneumatique monté sur une jante dont la largeur de jante serait trop petite et entrainerait une flexion relativement forte du pneumatique.

La jante de mesure est notamment définie aux pages 20 à 41 de la partie Passenger Car Tyres - Tyres with Metric Designation du manuel de la norme ETRTO 2019.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique ou de l'ensemble monté, c'est-à-dire l'axe de rotation du pneumatique ou de l'ensemble monté.

Par direction circonférentielle, on entend la direction qui est sensiblement perpendiculaire à la fois à la direction axiale et à un rayon du pneumatique ou de l'ensemble monté (en d'autres termes, tangente à un cercle dont le centre est sur l'axe de rotation du pneumatique ou de l'ensemble monté).

Par direction radiale, on entend la direction selon un rayon du pneumatique ou de l'ensemble monté, c'est-à-dire une direction quelconque coupant l'axe de rotation du pneumatique ou de l'ensemble monté et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique, on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique ou de l'ensemble monté et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans un mode de réalisation avantageux, LI'+1 ≤ LI ≤ LI'+4, de préférence LI'+2 ≤ LI ≤ LI'+4. Ainsi, on augmente davantage la capacité de chargement du pneumatique.

Dans des modes de réalisation également avantageux, 0,85 ≤ T2/A, de préférence 0,90 ≤ T2/A, et plus préférentiellement 0,93 ≤ T2/A ≤ 0,97.

Il est préférable d'avoir un rapport T2/A qui ne soit pas trop petit. En effet, pour une largeur de jante A donnée, il est préférable de ne pas trop réduire la valeur de la largeur axiale T2 de la couche de travail axialement la moins large au risque de réduire la rigidité de flexion sur chants et donc la rigidité de dérive à forte dérive. En outre, en réduisant trop la valeur de la largeur axiale T2 de la couche de travail axialement la moins large, on réduit la largeur de l'aire de contact ce qui augmente la pression exercée sur la bande de roulement et donc l'usure, cette usure étant amplifiée par le fait que les pneumatiques selon l'invention sont destinés à porter des charges relativement élevées conduisant nécessairement à une usure élevée, en tous cas plus élevée que des pneumatiques de même dimension dans leur version EXTRA LOAD amenés à porter des charges moindres. Pour une largeur axiale T2 de la couche de travail axialement la moins large donnée, il est également préférable de ne pas trop augmenter la valeur de la largeur de jante A afin, comme expliqué ci-dessus, de limiter l'augmentation des masses en rotation sur le véhicule mais également afin de réduire l'encombrement de l'ensemble monté pour favoriser l'habitabilité et la compacité du véhicule.

Dans des modes de réalisation préférés, le pneumatique présente une largeur de section nominale SW telle que T2 ≥ SW - 75, de préférence T2 ≥ SW - 70. Pour une largeur de section nominale donnée, la couche de travail axialement la moins large qui définit principalement la largeur de l'aire de contact n'est pas trop réduite. En effet, comme expliqué ci-dessus, cela permet de conserver une bonne performance en usure du pneumatique et ce malgré le fait que les pneumatiques selon l'invention sont destinés à porter des charges relativement élevées conduisant nécessairement à une usure relativement élevée.

Dans des modes de réalisation préférés, le pneumatique présente une largeur de section nominale SW telle que T2 ≤ SW - 27, de préférence T2 ≤ SW - 30.

Dans ces modes de réalisation tout comme dans l'invention d'une manière générale, la largeur de section nominale est celle du marquage de la dimension inscrite sur le flanc du pneumatique.

Dans des modes de réalisation préférés, le pneumatique présente une largeur de section nominale SW allant de 205 à 315, un rapport d'aspect nominal allant de 25 à 55, un diamètre de jante nominale allant de 17 à 23 et un indice de charge LI allant de 98 à 116, de préférence une largeur de section nominale SW allant de 225 à 315, un rapport d'aspect nominal allant de 25 à 55, un diamètre de jante nominale allant de 18 à 23 et un indice de charge LI allant de 98 à 116, et plus préférentiellement une largeur de section nominale SW allant de 245 à 315, un rapport d'aspect nominal allant de 30 à 45, un diamètre de jante nominale allant de 18 à 23 et un indice de charge LI allant de 98 à 116. Comme expliqué précédemment, les pneumatiques selon l'invention sont destinés à porter des charges relativement élevées conduisant nécessairement à une usure relativement élevée par rapport aux pneumatiques de mêmes dimensions dans leur version EXTRA LOAD. Ainsi, il est particulièrement avantageux d'utiliser des pneumatiques dont la largeur de section nominale est relativement élevée afin de réduire la pression exercée sur la bande de roulement et donc l'usure.

Avantageusement, 0,82≤H/LI≤0,98. Ainsi, on applique préférentiellement l'invention à des pneumatiques susceptibles de fléchir de façon relativement importante car présentant un indice de charge relativement élevé pour une hauteur de flanc donné, c'est-à-dire satisfaisant H/LI≤0,98. Ceci est rendu possible par le rapport T2/A qui permet de réduire la dissipation d'énergie malgré un fléchissement significatif du flanc. Néanmoins, si le flanc est trop court par rapport à l'indice de charge, c'est-à-dire satisfaisant H/LI<0,82, la flexion du flanc entraine une mise en compression relativement importante de l'armature de carcasse et donc un accroissement de la dissipation d'énergie.

Des modes de réalisation particulièrement préférés sont ceux dans lesquels le pneumatique présente une dimension et un indice de charge LI choisi parmi les dimensions et les indices de charge suivants: 225/55R18 105, 225/55ZR18 105 205/55R19 100, 205/55ZR19 100, 235/45R21 104, 235/45ZR21 104, 285/45R22 116, 285/45ZR22 116, 205/40R17 88, 205/40ZR17 88, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 275/35R21 105, 275/35ZR21 105, 285/35R21 108, 285/35ZR21 108, 295/35R22 111, 295/35ZR22 111, 275/35R23 108, 275/35ZR23 108, 285/30R21 103, 285/30ZR21 103, 315/30R21 109, 315/30ZR21 109, 325/30R21 111, 325/30ZR21 111, 315/30R23 111, 315/30ZR23 111.

Avantageusement, lorsque le pneumatique est monté sur le support de montage, le pneumatique est gonflé à une pression allant de 200 à 350 kPa, de préférence de 250 à 330 kPa. La pression est celle de l'ensemble monté à 25°C sans que le pneumatique n'ai roulé. Elle correspond souvent à une des pressions de gonflage recommandées par les constructeurs automobiles.

Dans des usages dans lesquels on souhaitera privilégier la capacité de charge du pneumatique, on utilisera une pression relativement élevée et supérieure ou égale à 270 kPa.

Dans des usages dans lesquels on souhaitera privilégier le confort des passagers et le comportement du véhicule, notamment l'adhérence sur sol sec, on utilisera une pression relativement faible et inférieure ou égale à 270 kPa.

Dans des modes de réalisation, l'armature de travail comprend une couche de travail radialement intérieure et une couche de travail radialement extérieure agencée radialement à l'extérieur de la couche de travail radialement intérieure.

De façon préférée, la couche de travail axialement la moins large est la couche de travail radialement extérieure de l'armature de travail.

Dans des modes de réalisation, la couche de travail axialement la moins large ou chaque couche de travail est délimitée axialement par deux bords axiaux de ladite couche de travail et comprend des éléments de renfort filaires de travail s'étendant axialement d'un bord axial à l'autre bord axial de ladite couche de travail les uns sensiblement parallèlement aux autres.

De façon optionnelle, chaque élément de renfort filaire de travail s'étend selon une direction principale formant, avec la direction circonférentielle du pneumatique, un angle, en valeur absolue, strictement supérieur à 10°, de préférence allant de 15° à 50° et plus préférentiellement allant de 20° à 35°.

De façon préférée, dans les modes de réalisation dans lesquels l'armature de travail comprend une couche de travail radialement la plus intérieure et une couche de travail radialement la plus extérieure agencée radialement à l'extérieur de la couche radialement la plus intérieure, la direction principale selon laquelle s'étend chaque élément de renfort filaire de travail de la couche de travail radialement la plus intérieure et la direction principale selon laquelle s'étend chaque élément de renfort filaire de travail de la couche de travail radialement la plus extérieure forment, avec la direction circonférentielle du pneumatique, des angles d'orientations opposées.

Dans des modes de réalisation dans lesquels le pneumatique présente une carcasse dite radiale, l'armature de carcasse comprend au moins une couche de carcasse, la ou chaque couche de carcasse étant délimitée axialement par deux bords axiaux de la ou chaque couche de carcasse, la ou chaque couche de carcasse comprend des éléments de renfort filaires de carcasse s'étendant axialement d'un bord axial à l'autre bord axial de la ou chaque couche de carcasse.

Dans des variantes, la ou chaque couche de carcasse comprend des éléments de renfort filaires textiles de carcasse s'étendant axialement d'un bord axial à l'autre bord axial de la ou chaque couche de carcasse selon une direction principale formant, avec la direction circonférentielle du pneumatique un angle allant, en valeur absolue, de 80° à 90°.

Par élément filaire, on entend un élément présentant une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Par textile, on entend un élément filaire comprenant un ou plusieurs monofilaments élémentaires textiles éventuellement revêtu d'une ou plusieurs couches d'un revêtement à base d'une composition adhésive. Ce ou ces monofilaments élémentaires textiles est ou sont obtenus, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans un premier mode de réalisation, l'armature de carcasse comprend une unique couche de carcasse.

Une telle armature de carcasse permet d'obtenir un pneumatique avec une dissipation d'énergie et une température de fonctionnement optimales, notamment à forte charge et sous une pression inférieure ou égale à la pression recommandée pour un pneumatique de même dimension dans sa version STANDARD LOAD ou EXTRA-LOAD. En effet, contrairement à une armature de carcasse comprenant deux couches de carcasse dans laquelle la flexion de chaque flanc entraine une mise en compression relativement importante de la couche de carcasse la plus axialement à l'intérieur dans le flanc et à l'épaule du pneumatique et un accroissement de la dissipation d'énergie, l'unique couche de carcasse présente une mise en compression moindre dans le flanc et à l'épaule et donc conduit à une température de fonctionnement moindre et plus optimale.

En particulier, il est avantageux de contrôler cette température de fonctionnement dans les cas de sous-gonflage qui sont fréquemment et chroniquement rencontrés. En effet, il est connu qu'un sous-gonflage conduise à une hausse de la température de fonctionnement des flancs dans le cas de pneumatiques dans leur version STANDARD LOAD ou EXTRA-LOAD. Dans le cas d'un pneumatique de type HIGH LOAD CAPACITY, un sous-gonflage est encore plus problématique et conduit à une hausse amplifiée de la température de fonctionnement des flancs en raison de la charge très élevée que porte le pneumatique.

Par unique couche de carcasse, on comprend que l'armature de carcasse est, à l'exception de la couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Dans ce premier mode de réalisation, de façon optionnelle, le pneumatique présente une hauteur de flanc H définie par H=SW x AR / 100 avec SW la largeur de section nominale et AR le rapport d'aspect nominal du pneumatique et telle que H < 95.

Les pneumatiques présentant une hauteur de flanc relativement réduite présentent une mise en compression relativement élevée de l'armature de carcasse et ce d'autant plus que la charge portée est élevée, ce qui est le cas des pneumatiques présentant un indice de charge LI conforme à l'invention. Ainsi, il est très avantageux d'utiliser une unique couche de carcasse en combinaison avec une hauteur de flanc H < 95.

Dans certains modes de réalisation optionnels mais néanmoins avantageux, 90 ≤ H < 95. En effet, ces modes de réalisation présentent des flancs relativement haut dans la plage des hauteurs de flancs couvertes par le premier mode de réalisation et pour lesquels l'utilisation d'une unique couche de carcasse est particulièrement avantageuse car elle permet de réduire significativement la masse du pneumatique et la résistance au roulement par rapport à un pneumatique comprenant deux couches de carcasse.

Dans une première variante permettant un ancrage de l'armature de carcasse par retournement, l'unique couche de carcasse forme un enroulement autour d'un élément de renforcement circonférentiel de chaque bourrelet de sorte qu'une portion axialement intérieure de l'unique couche de carcasse est agencée axialement à l'intérieur d'une portion axialement extérieure de l'unique couche de carcasse et de sorte que chaque extrémité axiale de l'unique couche de carcasse soit agencée radialement à l'extérieur de chaque élément de renforcement circonférentiel.

Dans une deuxième variante permettant un ancrage de l'armature de carcasse sans retournement, l'unique couche de carcasse présente une portion agencée axialement entre deux éléments de renforcement circonférentiels de chaque bourrelet et chaque extrémité axiale de l'unique couche de carcasse est agencée radialement à l'intérieur de chaque extrémité radialement extérieure de chaque élément de renforcement circonférentiel de chaque bourrelet. Une telle variante d'ancrage de l'armature de carcasse est décrite par exemple dans les documents WO2005/113259 ou bien WO2021/123522.

Le choix de l'ancrage de l'armature de carcasse se fera notamment en fonction de la hauteur de flanc H et de l'indice LI. En effet plus la hauteur de flanc H sera faible et l'indice de charge élevé, plus on privilégiera la deuxième variante d'ancrage. Dans les cas où la hauteur de flanc H est élevée et l'indice de charge faible, on pourra indifféremment choisir la première ou la deuxième variante de réalisation d'ancrage.

Dans le premier mode de réalisation, de préférence, chaque élément de renfort filaire textile de carcasse comprend un assemblage d'au moins deux brins multifilamentaires et présentant un titre total supérieur ou égal à 475 tex.

En effet, de façon à ce que l'unique couche de carcasse présente une résistance mécanique suffisante, on utilisera des éléments de renfort filaires textiles de carcasse présentant un titre relativement élevé, ce qui, pour un matériau donné, permet d'atteindre une résistance mécanique relativement élevée.

De façon optionnelle dans le premier mode de réalisation, chaque élément de renfort filaire textile de carcasse présente un diamètre moyen D ≥ 0,85 mm, de préférence D ≥ 0,90 mm. Egalement de façon optionnelle, D ≤ 1,10 mm, de préférence D ≤ 1,00 mm.

Dans le premier mode de réalisation et pour les raisons expliquées précédemment, on a encore plus avantageusement 0,82≤H/LI≤0,92.

Dans un deuxième mode de réalisation, l'armature de carcasse comprend des première et deuxième couches de carcasse.

Une telle armature de carcasse permet d'obtenir une armature relativement résistante notamment aux pincements (en anglais « Pinch Shock »).

Dans ce deuxième mode de réalisation, de façon optionnelle, le pneumatique présente une hauteur de flanc H définie par H=SW x AR / 100 avec SW la largeur de section nominale et AR le rapport d'aspect nominal du pneumatique et telle que H ≥ 95, de préférence H ≥ 100.

Les pneumatiques présentant une hauteur de flanc relativement importante conduisent à une mise en tension relativement importante de l'armature de carcasse, notamment de la portion de l'armature de carcasse ancrée dans le bourrelet, par exemple par retournement autour d'un élément de renforcement circonférentiel comme une tringle et ce en raison du volume de gaz de gonflage relativement important qu'ils contiennent en comparaison d'un pneumatique présentant une hauteur de flanc relativement faible. Cette mise en tension est d'autant plus élevée que la charge portée est élevée, ce qui est le cas des pneumatiques présentant un indice de charge LI conforme à l'invention. Ainsi, il est très avantageux d'utiliser deux couches de carcasse ce qui permet de réduire significativement la mise en tension de chaque couche de carcasse.

De plus, contrairement aux pneumatiques selon le premier mode de réalisation, les pneumatiques présentant une hauteur de flanc relativement élevée présentent une mise en compression relativement faible de l'armature de carcasse. Le risque de détérioration prématurée de l'armature de carcasse, notamment à forte charge et sous une pression relativement faible, est donc écarté malgré la présence de deux couches de carcasse.

De préférence, chaque première et deuxième couche de carcasse s'étend dans chaque flanc et dans le sommet radialement intérieurement à l'armature de sommet.

Dans une variante préférée, une des première et deuxième couches de carcasse forme un enroulement autour d'un élément de renforcement circonférentiel de chaque bourrelet de sorte qu'une portion axialement intérieure de ladite couche de carcasse est agencée axialement à l'intérieur d'une portion axialement extérieure de ladite couche de carcasse et de sorte que chaque extrémité axiale de ladite couche de carcasse soit agencée radialement à l'extérieur de chaque élément de renforcement circonférentiel.

Dans une première configuration préférée compatible avec la présence d'une première et d'une deuxième couches de carcasse :
- la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et
- chaque extrémité axiale de la deuxième couche de carcasse est agencée radialement à l'intérieur de chaque extrémité axiale de la première couche et est agencée :
   - axialement entre les portions axialement intérieure et extérieure de la première couche de carcasse, ou
   - axialement à l'intérieur de portion axialement intérieure de la première couche de carcasse,
   et de préférence, chaque extrémité axiale de la deuxième couche de carcasse est agencée axialement entre les portions axialement intérieure et extérieure de la première couche de carcasse.

Un tel agencement des première et deuxième couches de carcasse permet d'obtenir un couplage mécanique efficace entre les première et deuxième couches de carcasse permettant de réduire les cisaillements entre la première et la deuxième couche de carcasse. Ainsi, on réduit la dissipation d'énergie et l'élévation de la température du pneumatique et ce d'autant plus que les cisaillements sont particulièrement élevés à fortes charges.

En effet, un tel agencement de l'armature de carcasse est particulièrement avantageux dans le cas où 95 ≤ H ≤ 155. En effet, En limitant la hauteur de flanc du pneumatique à des hauteurs de flancs H telles que 95 ≤ H ≤ 155, on réduit le volume de gaz et donc la mise en tension de l'armature de carcasse à un niveau raisonnable.

En outre, grâce à l'agencement particulier des première et deuxième couches de carcasse, on obtient de façon surprenante un pneumatique avec une dissipation d'énergie et une température de fonctionnement optimales dans le flanc, notamment à forte charge et sous une pression inférieure ou égale à la pression recommandée pour un pneumatique de même dimension dans sa version STANDARD LOAD ou EXTRA-LOAD. Ceci est d'autant plus surprenant que l'agencement particulier des première et deuxième couches de carcasse est situé dans une zone du pneumatique, ici dans le bourrelet ou à proximité du bourrelet, et que cela permet de réduire la dissipation d'énergie dans une autre zone du pneumatique, éloignée du bourrelet, ici le flanc. On a découvert que l'agencement particulier de l'armature de carcasse, c'est-à-dire le fait que chaque extrémité axiale de la deuxième couche de carcasse est agencée axialement entre les portions axialement intérieure et extérieure de la première couche de carcasse, ou axialement à l'intérieur de la portion axialement intérieure de la première couche de carcasse, permet de réduire la différence de tensions entre la première couche de carcasse et la deuxième couche de carcasse. Or, plus la différence de tensions entre les première et deuxième couches de carcasse est réduite, moins on génère de cisaillement entre ces première et deuxième couches de carcasse et moins on dissipe d'énergie.

Dans une deuxième configuration compatible avec la présence d'une première et d'une deuxième couches de carcasse, la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et chaque extrémité axiale de la deuxième couche de carcasse est agencée radialement à l'intérieur de chaque extrémité axiale de la première couche et est agencée axialement à l'extérieur de chaque portion axialement extérieure de la première couche de carcasse.

Cette deuxième configuration est particulièrement avantageuse dans le cas où H > 155. En effet, pour des pneumatiques de type HIGH LOAD CAPACITY présentant une hauteur de flanc très importante telle que H>155, la tension de l'extrémité de la première couche de carcasse devenant très élevée, on devra envisager une armature de carcasse dans laquelle, à la différence de l'agencement décrit dans la première configuration, chaque extrémité axiale de la deuxième couche de carcasse est agencée axialement à l'extérieur de chaque portion axialement extérieure de la première couche de carcasse. Avec un tel agencement de l'armature de carcasse, on réduira la tension de l'extrémité de la première couche de carcasse à un niveau raisonnable.

Pour des pneumatiques de type HIGH LOAD CAPACITY présentant une hauteur de flanc très importante, c'est-à-dire avec H>155, même si la différence de tensions entre la première couche de carcasse et la deuxième couche de carcasse reste importante, la hauteur du flanc permet d'avoir une zone de cisaillement relativement grande qui dissipe efficacement l'énergie et pour laquelle il n'est pas préférable d'avoir l'agencement des première et deuxième couches de carcasse décrit dans la première configuration.

Dans le deuxième mode de réalisation, de préférence, chaque élément de renfort filaire textile de carcasse comprend un assemblage d'au moins deux brins multifilamentaires et présentant un titre total inférieur ou égal à 475 tex.

En effet, la présence de deux couches de carcasse permet de réduire le titre total de chaque élément de renfort filaire textile de carcasse de chaque couche et ce tout en ayant une résistance mécanique suffisante de l'armature de carcasse.

De façon optionnelle dans le deuxième mode de réalisation, chaque élément de renfort filaire textile de carcasse de chaque première et deuxième couche de carcasse présente respectivement un diamètre moyen D1, D2 tel que D1 ≤ 0,90 mm et D2 ≤ 0,90 mm, de préférence D1 ≤ 0,85 mm et D2 ≤ 0,85 mm et plus préférentiellement D1 ≤ 0,75 mm et D2 ≤ 0,75 mm.

De tels diamètres D1 et D2 relativement petits permettent de limiter l'initiation de fissures à proximité de l'extrémité de chaque première et deuxième couche de carcasse. En effet, l'extrémité de chaque élément de renfort filaire textile de carcasse constitue un point de départ privilégié pour l'initiation de fissures, notamment en raison du fait qu'elle soit dépourvue de toute composition adhésive et donc peu adhérente à la matrice adjacente dans laquelle elle est noyée. En réduisant chaque diamètre D1, D2, on réduit la surface de l'extrémité et donc le risque d'initiation de fissures. Egalement de façon optionnelle, D1 et D2 sont tels que D1 ≥ 0,55 mm et D2 ≥ 0,55 mm, de préférence D1 ≥ 0,60 mm et D2 ≥ 0,60 mm.

Dans le deuxième mode de réalisation et pour les raisons expliquées précédemment, on a encore plus avantageusement 0,88≤H/LI≤0,98.

Que ce soit dans le premier ou le deuxième mode de réalisation, la largeur de section nominale SW et le rapport d'aspect nominal AR sont ceux du marquage de la dimension inscrite sur le flanc du pneumatique et conformes au manuel de la norme ETRTO 2019. Les titres (ou densité linéique) de chaque brin et élément de renfort filaire sont déterminés selon la norme ASTM D 885/D 885M - 10a de 2014. Le titre est donné en tex (poids en grammes de 1000 m de produit - rappel: 0, 111 tex égal à 1 denier).

Que ce soit dans le premier ou le deuxième mode de réalisation, le diamètre de chaque élément de renfort filaire textile de carcasse est le diamètre du cercle le plus petit dans lequel est circonscrit l'élément de renfort filaire textile de carcasse. Le diamètre moyen est la moyenne des diamètres des éléments de renfort filaires textiles de carcasse situés sur une longueur de 10 cm de chaque couche de carcasse.

Que ce soit dans le premier ou le deuxième mode de réalisation, de façon optionnelle, chaque brin multifilamentaire est choisi parmi un brin multifilamentaire de polyester, un brin multifilamentaire de polyamide aromatique et un brin multifilamentaire de polyamide aliphatique, de préférence chaque brin multifilamentaire est choisi parmi un brin multifilamentaire de polyester et un brin multifilamentaire de polyamide aromatique.

Par brin multifilamentaire en polyester, on comprend un brin multifilamentaire constitué de monofilaments de macromolécules linéaires formées de groupes liés entre eux par des liaisons esters. Les polyesters sont fabriqués par polycondensation par estérification entre un diacide carboxylique ou l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par brin multifilamentaire en polyamide aromatique, on comprend un brin multifilamentaire constitué de monofilaments de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par brin multifilamentaire en polyamide aliphatique, on comprend un brin multifilamentaire constitué de monofilaments de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

De façon très préférée, l'assemblage est choisi parmi un assemblage de deux brins multifilamentaires de polyester et un assemblage d'un brin multifilamentaire de polyester et d'un brin multifilamentaire de polyamide aromatique.

Que ce soit dans le premier ou le deuxième mode de réalisation, dans certaines configurations préférées, chaque extrémité axiale de la couche de carcasse enroulée est agencée radialement à l'intérieur de l'équateur du pneumatique et encore plus préférentiellement agencée à une distance radiale inférieure ou égale à 30 mm d'une extrémité radialement intérieure de chaque élément de renforcement circonférentiel de chaque bourrelet.

En agençant chaque extrémité axiale de la couche de carcasse enroulée à l'intérieur de l'équateur du pneumatique, on réduit significativement la masse de l'armature de carcasse. En outre, l'immense majorité des jantes actuellement utilisées pour des pneumatiques pour véhicule de tourisme présente des crochets de type J dont la hauteur est, dans tous les cas inférieure à 30 mm. L'agencement très préférentiel de chaque extrémité axiale dans une zone correspondant radialement sensiblement au crochet de jante permet de protéger mécaniquement chaque extrémité axiale. En effet, si chaque extrémité axiale était agencée radialement trop au-dessus de chaque élément de renforcement circonférentiel de chaque bourrelet, c'est-à-dire à une distance radiale strictement supérieure à 30 mm de l'extrémité radialement intérieure de chaque élément de renforcement circonférentiel, chaque extrémité axiale se retrouverait alors dans une zone flexible du pneumatique soumise à de trop fortes sollicitations, sollicitations qui sont particulièrement importantes dans le cas d'un pneumatique de type HIGH LOAD CAPACITY.

De façon optionnelle, l'armature de sommet comprend une armature de frettage délimitée axialement par deux bords axiaux de l'armature de frettage et comprenant au moins un élément de renfort filaire de frettage enroulé circonférentiellement hélicoïdalement de façon à s'étendre axialement entre les bords axiaux de l'armature de frettage.

De façon préférée, l'armature de frettage est agencée radialement à l'extérieur de l'armature de travail.

De façon préférée, le ou chaque élément de renfort filaire de frettage s'étend selon une direction principale formant, avec la direction circonférentielle du pneumatique, un angle, en valeur absolue, inférieur ou égal à 10°, de préférence inférieur ou égal à 7° et plus préférentiellement inférieur ou égal à 5°.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un ensemble monté comprenant un pneumatique selon un premier mode de réalisation de l'invention,
- la figure 2 est une vue, dans un plan de coupe méridien, du pneumatique de la figure 1,
- la figure 3 est une vue en coupe selon le plan III-III' de la figure 2 illustrant l'armature de carcasse du pneumatique de la figure 1,
- les figures 4 et 5 sont des vues analogues respectivement aux figures 2 et 3 d'un pneumatique selon un deuxième mode de réalisation, et
- la figure 6 est une vue analogue à celle de la figure 1 comparant la flèche d'un ensemble monté de l'état de la technique et celle de l'ensemble monté de la figure 1.

Sur les figures, on a représenté un repère X, Y, Z correspondant aux directions habituelles respectivement axiale (Y), radiale (Z) et circonférentielle (X) d'un pneumatique ou d'un ensemble monté.

Dans la description qui suit, les mesures réalisées sont réalisées sur un pneumatique non chargé et non gonflé ou sur une coupe de pneumatique dans un plan méridien.

### PNEUMATIQUE SELON UN PREMIER MODE DE REALISATION

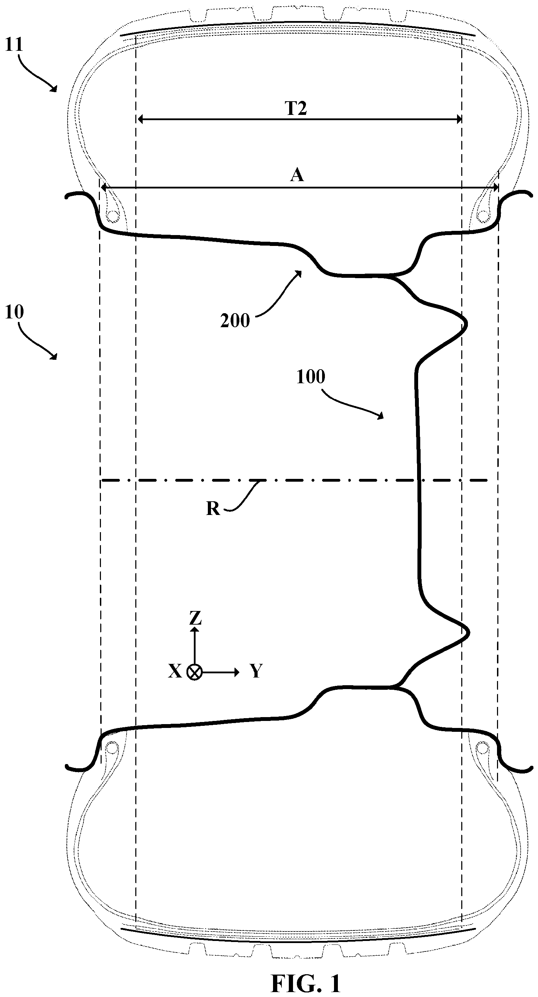

On a représenté sur la figure 1 un ensemble monté désigné par la référence générale 10. L'ensemble monté 10 comprend un pneumatique 11 selon l'invention et un support de montage 100 comprenant une jante 200. Le pneumatique 11 est ici gonflé à une pression allant de 200 à 350 kPa, de préférence de 250 à 330 kPa et ici égale à 270 kPa.

Le pneumatique 11 présente une forme sensiblement torique autour d'un axe de révolution R sensiblement parallèle à la direction axiale Y. Le pneumatique 11 est destiné à un véhicule de tourisme. Sur les différentes figures, le pneumatique 11 est représenté à l'état neuf, c'est-à-dire n'ayant pas encore roulé.

Le pneumatique 11 comprend deux flancs 30 portant un marquage indiquant la dimension du pneumatique 11, ainsi qu'un indice de vitesse et un code de vitesse. En l'espèce, le pneumatique 11 présente une largeur de section nominale SW allant de 205 à 315, de préférence de 225 à 315, plus préférentiellement allant de 245 à 315 et ici égale à 205. Le pneumatique 11 présente également un rapport d'aspect nominal AR allant de 25 à 55, de préférence allant de 30 à 45 et ici égal à 40. Le pneumatique 11 présente un diamètre de jante nominale allant de 17 à 23 et ici égal à 17. Le pneumatique 11 présente donc une hauteur de flanc H définie par SW x AR /100 =82 < 95.

Conformément à l'invention, le marquage comprend également un indice de charge LI allant de 98 à 116, tel que LI ≥ LI'+1 avec LI' étant l'indice de charge d'un pneumatique EXTRA LOAD présentant la même dimension selon le manuel de la norme ETRTO 2019. De préférence, LI'+1 ≤ LI ≤ LI'+4, et même LI'+2 ≤ LI ≤ LI'+4.

Un pneumatique présentant une dimension 205/40R17 dans sa version EXTRA LOAD présente un indice de charge égal à 84 comme cela est indiqué à la page 34 de la partie Passenger Car Tyres - Tyres with Metric Designation du manuel de la norme ETRTO 2019. Ainsi, l'indice de charge LI du pneumatique 11 est tel que LI ≥85, de préférence 85 ≤ LI ≤ 88 et même 86 ≤ LI ≤ 88 et ici LI=88. Cet indice de charge égal à 88 correspond bien à l'indice de charge d'un pneumatique HIGH LOAD CAPACITY de dimension 205/40R17. Ainsi, le pneumatique 11 est bien du type HIGH LOAD CAPACITY.

Le pneumatique 11 est tel que 0,82 ≤ H/LI ≤ 0,98 et ici H/LI=0,93.

Pour une telle dimension, le manuel de la norme ETRTO 2019 indique, page 34 de la partie Passenger Car Tyres - Tyres with Metric Designation, une jante de mesure présentant un code de largeur de jante égal à 7,5. Le pneumatique est apte à être monté sur la jante 200 de l'ensemble monté 10.

Ici, la jante 200 est la jante présentant un code de largeur de jante égal au code de largeur de la jante de mesure pour la dimension du pneumatique minoré de 0,5 et donc ici égal à 7,0. La jante 200 présente un profil de type J et une largeur de jante A selon le manuel de la norme ETRTO 2019. En l'espèce, le profil de la jante 200 étant du type 7,0 J, sa largeur de jante A exprimée en mm est égale à 177,80 mm.

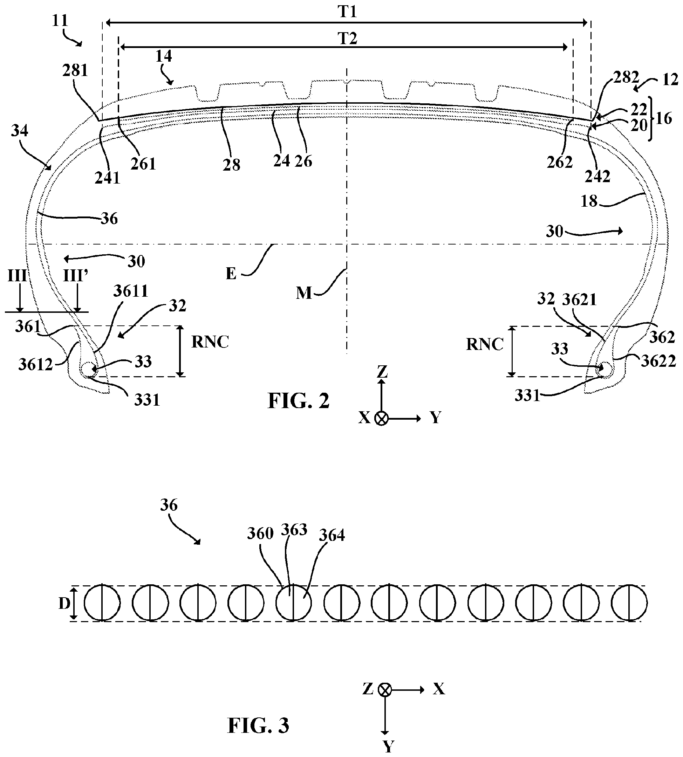

En référence à la figure 2, le pneumatique 11 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 11 comprend également une couche d'étanchéité 18 à un gaz de gonflage étant destinée à délimiter une cavité interne fermée avec le support de montage 100 du pneumatique 11 une fois le pneumatique 11 monté sur le support de montage 100.

L'armature de sommet 16 comprend une armature de travail 20 et une armature de frettage 22. L'armature de travail 16 comprend au moins une couche de travail et ici comprend deux couches de travail comprenant une couche de travail 24 radialement intérieure agencée radialement à l'intérieur d'une couche de travail 26 radialement extérieure. Parmi les deux couches radialement intérieure 24 et radialement extérieure 26, la couche axialement la moins large est la couche radialement extérieure 26.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Les deux flancs 30 prolongent le sommet 12 radialement vers l'intérieur. Le pneumatique 11 comporte en outre deux bourrelets 32 radialement intérieurs aux flancs 30. Chaque flanc 30 relie chaque bourrelet 32 au sommet 12.

Le pneumatique 11 comprend une armature de carcasse 34 ancrée dans chaque bourrelet 32, en l'espèce forme un enroulement autour d'un élément de renforcement circonférentiel 33, ici une tringle. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36 et ici une unique couche de carcasse 36.

L'armature de frettage 22, ici la couche de frettage 28, est délimitée axialement par deux bords axiaux 281, 282 et comprend un ou plusieurs éléments de renfort filaires de frettage enroulés circonférentiellement hélicoïdalement entre chaque bord axial 281, 282 selon une direction principale formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 est délimitée axialement par deux bords axiaux respectivement 241, 242, 261, 262 de chaque couche de travail 24, 26. La couche de travail radialement intérieure 24 présente une largeur axiale T1=180,00 mm et la couche de travail radialement extérieure 26 présente une largeur axiale T2=166,00 mm faisant de la couche de travail radialement extérieure 26 la couche de travail axialement la moins large.

On notera que SW=205 et T2=166 satisfont les relations suivantes T2 ≥ SW - 75, de préférence T2 ≥ SW - 70 et T2 ≤ SW - 27, de préférence T2 ≤ SW - 30.

Comme cela est illustré sur la figure 1, le pneumatique 11 présente des flancs rectifiés radialement. En effet, le rapport T2/A est tel que 0,85 ≤ T2/A ≤ 1,00, de préférence 0,90 ≤ T2/A ≤ 1,00, et plus préférentiellement 0,93 ≤ T2/A ≤ 0,97 et ici T2/A=0,93.

Chaque couche de travail 24, 26 comprend des éléments de renfort filaires de travail s'étendant axialement d'un bord axial 241, 261 à l'autre bord axial 242, 262 de chaque couche de travail 24, 26 les uns sensiblement parallèlement aux autres selon des directions principales formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 20° à 35°. Ici, AT1=-26° et AT2=+26°.

L'unique couche de carcasse 36 est délimitée axialement par deux bords axiaux respectivement 361, 362 et comprend des éléments de renfort filaires textiles de carcasse respectivement 360 s'étendant axialement d'un bord axial 361 à l'autre bord axial 362 selon une direction principale D3 formant avec la direction circonférentielle X du pneumatique 10, un angle AC, en valeur absolue, allant de 80° à 90° et ici AC=+90°.

L'unique couche de carcasse 36 forme un enroulement autour de chaque élément de renforcement circonférentiel 33 de chaque bourrelet 32 de sorte qu'une portion axialement intérieure 3611, 3621 de la première couche de carcasse 36 est agencée axialement à l'intérieur d'une portion axialement extérieure 3612, 3622 de la première couche de carcasse 36 et de sorte que chaque extrémité axiale 361, 362 de la première couche de carcasse 36 soit agencée radialement à l'extérieur de chaque élément de renforcement circonférentiel 33.

Chaque extrémité axiale 361, 362 de l'unique couche de carcasse 36 est agencée radialement à l'intérieur de l'équateur E du pneumatique. Plus précisément, chaque extrémité axiale 361, 362 de la première couche de carcasse 36 est agencée à une distance radiale RNC inférieure ou égale à 30 mm d'une extrémité radialement extérieure 331 de chaque élément de renforcement circonférentiel 33 de chaque bourrelet 32. Ici RNC=23 mm.

Chaque couche de travail 24, 26, de frettage 28 et de carcasse 36 comprend une matrice de calandrage des éléments de renfort filaires de la couche correspondante. De préférence la matrice de calandrage est polymérique et plus préférentiellement élastomérique comme celles usuellement utilisées dans le domaine des pneumatiques.

Chaque élément de renfort filaire de frettage comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans encore une autre variante, on pourra utiliser un élément de renfort filaire de frettage comprenant deux brins multifilamentaires constitués chacun d'un filé de monofilaments de polyamide aromatique, ici d'aramide d'un titre égal à 330 tex et un brin multifilamentaire constitué d'un filé de monofilaments de polyamide aliphatique, ici de nylon d'un titre égal à 188 tex, chacun des brins multifilamentaires étant mis en hélice individuellement à 270 tours par mètre dans un sens puis mis en hélice ensemble à 270 tours par mètre dans le sens opposé. Ces trois brins multifilamentaires sont enroulés en hélice l'un autour de l'autre.

D'une manière générale, l'utilisation d'une forte charge entraine une diminution de la vitesse limite acceptable du pneumatique ainsi qu'une dégradation de son comportement, par exemple sa rigidité de dérive. Ainsi, en utilisant un ou des éléments de renfort filaires de frettage à haut module, par exemple comme ceux décrits dans les deux dernières variantes ci-dessus comprenant un ou plusieurs brins de polyamide aromatique, on peut augmenter la vitesse limite acceptable par le pneumatique et améliorer le comportement, notamment sa rigidité de dérive.

Chaque élément de renfort filaire de travail est un assemblage 4.26 de quatre monofilaments en acier et comprenant une couche interne de deux monofilaments et une couche externe de deux monofilaments enroulés ensemble en hélice autour de la couche interne au pas de 14,0 mm par exemple dans le sens S. Un tel assemblage 4.26 présente une force à rupture égale à 640 N, un diamètre égal à 0,7 mm. Chaque monofilament en acier présente un diamètre égal à 0,26 mm et une résistance mécanique égale à 3250 MPa. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S.

Comme cela est représenté sur la figure 3, chaque élément de renfort filaire textile de carcasse 360 comprend un assemblage d'au moins deux brins multifilamentaires 363, 364. Chaque brin multifilamentaire 363, 364 est choisi parmi un brin multifilamentaire de polyester, un brin multifilamentaire de polyamide aromatique et un brin multifilamentaire de polyamide aliphatique, de préférence choisi parmi un brin multifilamentaire de polyester et un brin multifilamentaire de polyamide aromatique. En l'espèce, l'assemblage est choisi parmi un assemblage de deux brins multifilamentaires de polyester et un assemblage d'un brin multifilamentaire de polyester et d'un brin multifilamentaire de polyamide aromatique et ici est constitué de deux brins multifilamentaires de PET, ces deux brins multifilamentaires étant mis en hélice individuellement à 270 tours par mètre dans un sens puis mis en hélice ensemble à 270 tours par mètre dans le sens opposé. Chacun de ces brins multifilamentaires présente un titre égal à 334 tex de sorte que le titre total de l'assemblage soit supérieur ou égal à 475 tex et ici égal à 668 tex. Chaque élément de renfort filaire textile de carcasse 360 présente un diamètre moyen D, exprimé en mm tel que D ≥ 0,85 mm, de préférence D ≥ 0,90 mm et tel que D ≤ 1,10 mm, de préférence D ≤ 1,00 mm. En l'espèce, D=0,95 mm.

### PNEUMATIQUE SELON UN DEUXIEME MODE DE REALISATION

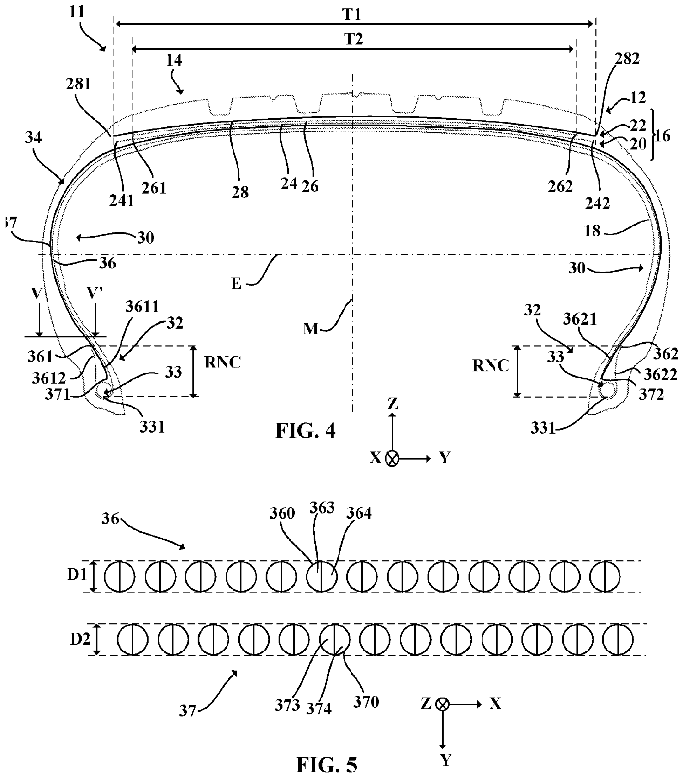

On va maintenant décrire un pneumatique selon un deuxième mode de réalisation en référence aux figures 4 et 5. Les éléments analogues à ceux du premier mode de réalisation sont désignés par des références identiques.

A la différence du premier mode de réalisation, le pneumatique 11 présente la dimension 255/40R20, c'est-à-dire une largeur de section nominale SW=255, un rapport d'aspect nominal AR=40 et un diamètre de jante nominale ici égal à 20. Le pneumatique 11 du deuxième mode de réalisation présente une hauteur de flanc H définie par SW x AR / 100 =102 ≥ 95, de préférence H ≥ 100.

Le marquage comprend également un indice de charge LI allant de 98 à 116, tel que LI ≥ LI'+1 avec LI' étant l'indice de charge d'un pneumatique EXTRA LOAD présentant la même dimension selon le manuel de la norme ETRTO 2019. De préférence, LI'+1 ≤ LI ≤ LI'+4, et même LI'+2 ≤ LI ≤ LI'+4.

Un pneumatique présentant une dimension 255/40R20 dans sa version EXTRA LOAD présente un indice de charge égal à 101 comme cela est indiqué à la page 34 de la partie Passenger Car Tyres - Tyres with Metric Designation du manuel de la norme ETRTO 2019. Ainsi, l'indice de charge LI du pneumatique 11 est tel que LI ≥102, de préférence 102 ≤ LI ≤ 105 et même 103 ≤ LI ≤ 105 et ici LI=104. Cet indice de charge égal à 104 correspond bien à l'indice de charge d'un pneumatique HIGH LOAD CAPACITY de dimension 255/40R20 comme cela est indiqué dans le manuel ETRTO 2021. Ainsi, le pneumatique 11 est bien du type HIGH LOAD CAPACITY.

Le pneumatique 11 est donc tel que 0,82 ≤ H/LI ≤ 0,98 et de préférence 0,88 ≤ H/LI ≤ 0,98 et ici H/LI=0,98.

Pour une telle dimension, le manuel de la norme ETRTO 2019 indique, page 34 de la partie Passenger Car Tyres - Tyres with Metric Designation, une jante de mesure présentant un code de largeur de jante égal à 9. Ainsi, on utilisera une jante 200 présentant un code de largeur de jante égal au code de largeur de la jante de mesure pour la dimension du pneumatique minoré de 0,5, ici 8,5 c'est-à-dire présentant une largeur de jante A=215,90 mm.

Chaque couche de travail radialement intérieure 24 et radialement extérieure 26 présente respectivement une largeur axiale T1=224 mm et T2=210,00 mm.

On notera que, tout comme dans le premier mode de réalisation, SW=255 et T2=210 mm satisfont les relations suivantes T2 ≥ SW - 75, de préférence T2 ≥ SW - 70 et T2 ≤ SW - 27, de préférence T2 ≤ SW - 30 et que le rapport T2/A est tel que 0,85 ≤ T2/A ≤ 1,00, de préférence 0,90 ≤ T2/A ≤ 1,00 et plus préférentiellement 0,93 ≤ T2/A ≤ 0,97 et ici T2/A=0,97.

A la différence du premier mode de réalisation, le pneumatique 11 du deuxième mode de réalisation comprend des première et deuxième couches de carcasse 36, 37 délimitée axialement par deux bords axiaux respectivement 361, 362, 371, 372 et comprenant des éléments de renfort filaires textiles de carcasse respectivement 360, 370 s'étendant axialement d'un bord axial 361, 371 à l'autre bord axial 362, 372 selon une direction principale D3 formant avec la direction circonférentielle X du pneumatique 10, un angle AC, en valeur absolue, allant de 80° à 90° et ici AC=+90°.

Chaque première et deuxième couche de carcasse 36, 37 s'étend dans chaque flanc 30 et dans le sommet 12 radialement intérieurement à l'armature de sommet 16.

La première couche de carcasse 36 forme un enroulement autour de chaque élément de renforcement circonférentiel 33 de chaque bourrelet 32 de sorte qu'une portion axialement intérieure 3611, 3621 de la première couche de carcasse 36 est agencée axialement à l'intérieur d'une portion axialement extérieure 3612, 3622 de la première couche de carcasse 36 et de sorte que chaque extrémité axiale 361, 362 de la première couche de carcasse 36 soit agencée radialement à l'extérieur de chaque élément de renforcement circonférentiel 33. Chaque extrémité axiale 371, 372 de la deuxième couche de carcasse 37 est agencée radialement à l'intérieur de chaque extrémité axiale de la première couche 361, 362 et est agencée axialement entre les portions axialement intérieure et extérieure 3611, 3612 et 3621, 3622 de la première couche de carcasse 36.

Chaque extrémité axiale 361, 362 de la première couche de carcasse 36 est agencée radialement à l'intérieur de l'équateur E du pneumatique. Plus précisément, chaque extrémité axiale 361, 362 de la première couche de carcasse 36 est agencée à une distance radiale RNC inférieure ou égale à 30 mm d'une extrémité radialement extérieure 331 de chaque élément de renforcement circonférentiel 33 de chaque bourrelet 32. Ici RNC=23 mm.

Chaque élément de renfort filaire textile de carcasse textile 360, 370 de chaque première et deuxième couche de carcasse 36, 37 comprend un assemblage d'au moins deux brins multifilamentaires 363, 364, 373, 374. Ici, chaque assemblage est constitué de deux brins multifilamentaires de PET, ces deux brins multifilamentaires étant mis en hélice individuellement à 420 tours par mètre dans un sens puis mis en hélice ensemble à 420 par mètre dans le sens opposé. Chacun de ces brins multifilamentaires présente un titre égal à 144 tex de sorte que le titre total de l'assemblage soit inférieur ou égal à 475 tex et ici égal à 288 tex.

Chaque élément de renfort filaire textile de carcasse 360, 370 présente un diamètre moyen respectivement D1, D2, exprimé en mm tel que que D1 ≤ 0,90 mm et D2 ≤ 0,90 mm, de préférence D1 ≤ 0,85 mm et D2 ≤ 0,85 mm et plus préférentiellement D1 ≤ 0,75 mm et D2 ≤ 0,75 mm et tel que D1 ≥ 0,55 mm et D2 ≥ 0,55 mm, de préférence D1 ≥ 0,60 mm et D2 ≥ 0,60 mm. Ici, D1=D2=0,62 mm.

### TESTS COMPARATIFS

### Test statique

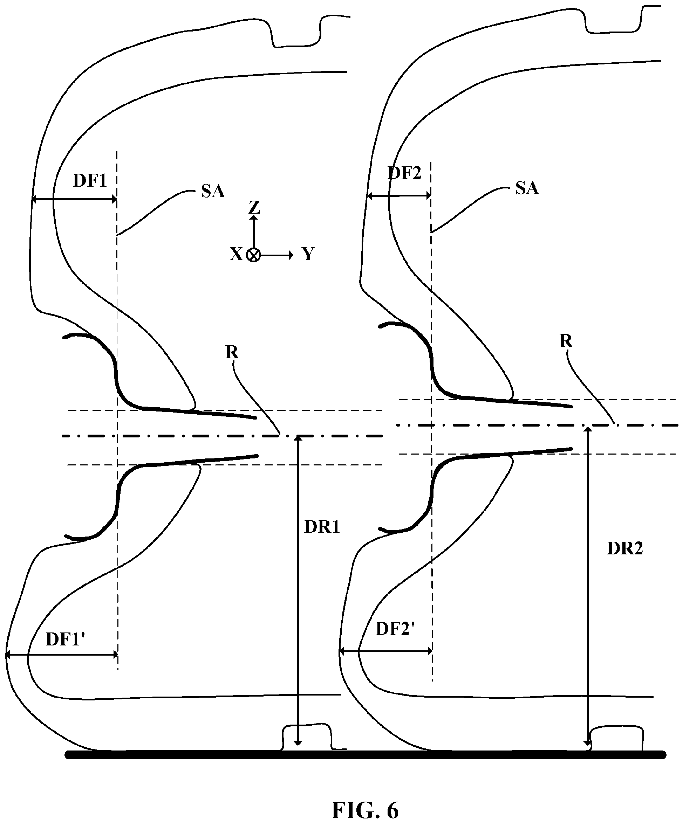

On a illustré sur la figure 6 le résultat d'un test statique d'écrasement d'un pneumatique de dimension 205/40R17 analogue au premier mode de réalisation mais dans lequel le rapport T2/A est égal à 1,01 (pneumatique illustré à gauche dans lequel on a utilisé des couches de travail avec T1=180 mm et T2=180 mm) et le pneumatique selon le premier mode de réalisation dont le rapport T2/A est égal à 0,93 (pneumatique illustré à droite). La charge appliquée sur chaque pneumatique est égale à 560 kg à une pression de 250 kPa.

On note que la flèche du pneumatique de gauche est bien supérieure à la flèche du pneumatique de droite. En effet, la distance DR1 de l'axe de rotation R au sol du pneumatique de gauche est inférieure à la distance DR2 de l'axe de rotation R au sol du pneumatique de droite.

On note en particulier que les flancs du pneumatique de droite sont radialement plus droits que les flancs du pneumatique de gauche. Cela est visible en comparant, à une même cote radiale de chaque flanc, les distances DF1 et DF2 entre la surface extérieure du flanc situé à l'opposé de l'aire de contact et le plan perpendiculaire SA à l'axe de rotation R du pneumatique et passant par la face d'appui de la jante délimitant la largeur axiale A de la jante. On peut également constater cela en comparant, à une même cote radiale de chaque flanc situé au droit de l'aire de contact, les distances DF1' et DF2' entre la surface extérieure du flanc et le plan perpendiculaire SA. On observe que DF1>DF2 et que DF1'>DF2'.

### Simulations de test de roulage

Les inventeurs ont simulé le roulage des pneumatiques selon les premier et deuxième modes de réalisation de l'invention monté sur différentes jantes, y compris la jante présentant un code de largeur de jante égal au code de largeur de la jante de mesure pour la dimension du pneumatique minoré de 0,5, ici 7 pour le pneumatique selon le premier mode de réalisation et 8,5 pour le pneumatique selon le deuxième mode de réalisation. On a également simulé le roulage des pneumatiques selon les premier et deuxième modes de réalisation de l'invention sur des jantes non recommandées par le manuel de la norme ETRTO 2019 au fins de démonstration et de compréhension de l'effet technique de l'invention (jantes présentant respectivement un code de largeur de jante égal à 6,5 et 8).

Pour chaque ensemble monté, on a réalisé une simulation d'un test de roulage analogue à l'essai de performance charge/vitesse décrit en annexe VII du Règlement n°30 de la CEE-ONU, mais dans des conditions encore plus sollicitantes.

Lors de ces simulations, on a relevé le maximum de la dissipation d'énergie volumique DNRJ de la matrice de calandrage d'une portion de l'unique couche de carcasse pour le pneumatique selon le premier mode de réalisation et d'une portion de la deuxième couche de carcasse pour le pneumatique selon le deuxième mode de réalisation, située dans le flanc, exprimée en daN/mm2. Plus cette valeur est élevée, plus la dissipation d'énergie par la structure du pneumatique est élevée et plus l'élévation de température est importante.

On a rapporté ces valeurs à une valeur relative 100 en-dessous de laquelle la dissipation d'énergie est maitrisée pour la dimension testée et au-dessus de laquelle la dissipation d'énergie n'est pas suffisamment maitrisée. Cette valeur relative 100 est différente pour chaque dimension testée.

On a également calculé le gain en gabarit extérieur du véhicule par rapport à la jante de mesure. Un gain négatif correspond à une augmentation du gabarit extérieur du véhicule. Pour une jante donnée, un gain en gabarit extérieur du véhicule s'accompagne nécessairement d'une baisse de la masse de la jante et donc une baisse des masses en rotation sur le véhicule.

On a rassemblé ces valeurs dans les tableaux 1 et 2 ci-dessous respectivement pour chaque premier et deuxième mode de réalisation.

**Tableau 1**

| A (Pouces) | Gain (cm) | T2/A | DNRJ (Base 100) |
|---|---|---|---|
| 6,5 | 5,08 | 1,01 | 117 |
| 7 | 2,54 | 0,93 | 60 |
| 7,5 | 0 | 0,87 | 37 |
| 8 | -2,54 | 0,82 | 43 |

**Tableau 2**

| A (Pouces) | Gain (cm) | T2/A | DNRJ (Base 100) |
|---|---|---|---|
| 8 | 5,08 | 1,03 | 120 |
| 8,5 | 2,54 | 0,97 | 73 |
| 9 | 0 | 0,92 | 47 |
| 9,5 | -2,54 | 0,87 | 53 |

Ces tests montrent que la diminution du rapport T2/A permet de maitriser la dissipation d'énergie dans la portion de l'armature de carcasse située dans le flanc et ce même sous une charge relativement élevée et avec une pression inférieure à la pression recommandée pour porter la charge correspondante.

Ainsi, afin d'une part, de maitriser cette dissipation d'énergie et, d'autre part, de limiter l'augmentation des masses en rotation sur le véhicule mais également l'encombrement de l'ensemble monté pour favoriser l'habitabilité et la compacité du véhicule, le meilleur compromis est obtenu en limitant la larguer axiale T2 et en utilisant une jante présentant un code de largeur de jante égal au code de largeur de la jante de mesure pour la dimension du pneumatique et définie selon le manuel de la norme ETRTO 2019 minoré de 0,5 de sorte que le rapport T2/A soit inférieur ou égal à 1,00.

L'invention ne se limite pas aux modes de réalisation précédemment décrits.

## Revendications

1. Pneumatique (11) pour véhicule de tourisme comprenant un sommet (12), deux bourrelets (32), deux flancs (30) reliant chacun chaque bourrelet (32) au sommet (12) et une armature de carcasse (34) ancrée dans chaque bourrelet (32), le sommet (12) comprenant une armature de sommet (16) et une bande de roulement (14), l'armature de carcasse (34) s'étendant dans chaque flanc (30) et dans le sommet (12) radialement intérieurement à l'armature de sommet (16), l'armature de sommet (16) étant agencée radialement entre la bande de roulement (14) et l'armature de carcasse (34) et comprenant une armature de travail (20) comprenant au moins une couche de travail axialement la moins large (26), la couche de travail axialement la moins large (26) présentant une largeur axiale T2 exprimée en mm,
le pneumatique (11) est apte à être monté sur un support de montage (100) comprenant une jante (200), **caractérisé en ce que** le pneumatique (11) présente un indice de charge LI tel que LI ≥ LI'+1 et LI' étant l'indice de charge d'un pneumatique EXTRA LOAD présentant la même dimension selon le manuel de la norme ETRTO 2019, et **en ce que**, lorsque le pneumatique est monté sur une jante présentant un code de largeur de jante égal au code de largeur de la jante de mesure pour la dimension du pneumatique et définie selon le manuel de la norme ETRTO 2019 minoré de 0,5, le rapport T2/A est tel que T2/A ≤ 1,00 avec A étant la largeur de jante A selon le manuel de la norme ETRTO 2019, et exprimée en mm de la jante.

2. Pneumatique (11) selon la revendication précédente, dans lequel LI'+1 ≤ LI ≤ LI'+4, de préférence LI'+2 ≤ LI ≤ LI'+4.

3. Pneumatique (11) selon l'une quelconque des revendications précédentes, dans lequel 0,85 ≤ T2/A, de préférence 0,90 ≤ T2/A, et plus préférentiellement 0,93 ≤ T2/A ≤ 0,97.

4. Pneumatique (11) selon l'une quelconque des revendications précédentes, dans lequel le pneumatique (11) présente une largeur de section nominale SW telle que T2 ≥ SW - 75, de préférence T2 ≥ SW - 70.

5. Pneumatique (11) selon l'une quelconque des revendications précédentes, dans lequel le pneumatique (11) présente une largeur de section nominale SW telle que T2 ≤ SW - 27, de préférence T2 ≤ SW - 30.

6. Pneumatique (11) selon l'une quelconque des revendications précédentes, dans lequel le pneumatique (11) présente une largeur de section nominale SW allant de 205 à 315, un rapport d'aspect nominal allant de 25 à 55, un diamètre de jante nominale allant de 17 à 23 et un indice de charge LI allant de 98 à 116, de préférence une largeur de section nominale SW allant de 225 à 315, un rapport d'aspect nominal allant de 25 à 55, un diamètre de jante nominale allant de 18 à 23 et un indice de charge LI allant de 98 à 116, et plus préférentiellement une largeur de section nominale SW allant de 245 à 315, un rapport d'aspect nominal allant de 30 à 45, un diamètre de jante nominale allant de 18 à 23 et un indice de charge LI allant de 98 à 116.

7. Pneumatique (11) selon l'une quelconque des revendications précédentes, dans lequel le pneumatique (11) présente une dimension et un indice de charge LI choisi parmi les dimensions et les indices de charge suivants: 225/55R18 105, 225/55ZR18 105, 205/55R19 100, 205/55ZR19 100, 235/45R21 104, 235/45ZR21 104, 285/45R22 116, 285/45ZR22 116, 205/40R17 88, 205/40ZR17 88, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 275/35R21 105, 275/35ZR21 105, 285/35R21 108, 285/35ZR21 108, 295/35R22 111, 295/35ZR22 111, 275/35R23 108, 275/35ZR23 108, 285/30R21 103, 285/30ZR21 103, 315/30R21 109, 315/30ZR21 109, 325/30R21 111, 325/30ZR21 111, 315/30R23 111, 315/30ZR23 111.

8. Pneumatique (11) selon l'une quelconque des revendications précédentes, dans lequel l'armature de travail (20) comprend une couche de travail radialement intérieure (24) et une couche de travail radialement extérieure (26) agencée radialement à l'extérieur de la couche de travail radialement intérieure (24).

9. Pneumatique (11) selon l'une quelconque des revendications précédentes, dans lequel la couche de travail axialement la moins large (26) ou chaque couche de travail (24, 26) est délimitée axialement par deux bords axiaux (241, 242, 261, 262) de ladite couche de travail (24, 26) et comprend des éléments de renfort filaires de travail s'étendant axialement d'un bord axial à l'autre bord axial de ladite couche de travail (24, 26) les uns sensiblement parallèlement aux autres.

10. Pneumatique (11) selon la revendication précédente, dans lequel chaque élément de renfort filaire de travail s'étend selon une direction principale formant, avec la direction circonférentielle (X) du pneumatique (11), un angle, en valeur absolue, strictement supérieur à 10°, de préférence allant de 15° à 50° et plus préférentiellement allant de 20° à 35°.

11. Pneumatique (11) selon l'une quelconque des revendications précédentes, dans lequel l'armature de carcasse (34) comprend au moins une couche de carcasse (36, 37), la ou chaque couche de carcasse (36, 37) étant délimitée axialement par deux bords axiaux (361, 362, 371, 372) de la ou chaque couche de carcasse (36, 37) et comprend des éléments de renfort filaires textiles (360, 370) de carcasse s'étendant axialement d'un bord axial à l'autre bord axial de la ou chaque couche de carcasse (36, 37) selon une direction principale formant, avec la direction circonférentielle (X) du pneumatique (11) un angle allant, en valeur absolue, de 80° à 90°.

12. Utilisation d'un pneumatique (11) pour véhicule de tourisme comprenant un sommet (12), deux bourrelets (32), deux flancs (30) reliant chacun chaque bourrelet (32) au sommet (12) et une armature de carcasse (34) ancrée dans chaque bourrelet (32), le sommet (12) comprenant une armature de sommet (16) et une bande de roulement (14), l'armature de carcasse (34) s'étendant dans chaque flanc (30) et dans le sommet (12) radialement intérieurement à l'armature de sommet (16), l'armature de sommet (16) étant agencée radialement entre la bande de roulement (14) et l'armature de carcasse (34) et comprenant une armature de travail (20) comprenant au moins une couche de travail axialement la moins large (26), la couche de travail axialement la moins large (26) présentant une largeur axiale T2 exprimée en mm,
sur un support de montage (100) comprenant une jante (200) de sorte que, lorsque le pneumatique est monté sur une jante présentant un code de largeur de jante égal au code de largeur de la jante de mesure pour la dimension du pneumatique et définie selon le manuel de la norme ETRTO 2019 minoré de 0,5, le rapport T2/A est tel que T2/A ≤ 1,00 avec A étant la largeur de jante A selon le manuel de la norme ETRTO 2019, et exprimée en mm de la jante, pour que le pneumatique (11) présente un indice de charge LI tel que LI ≥ LI'+1 et LI' étant l'indice de charge d'un pneumatique EXTRA LOAD présentant la même dimension selon le manuel de la norme ETRTO 2019.

13. Utilisation d'un pneumatique (11) selon la revendication précédente, pour que le pneumatique (11) soit monté sur un véhicule ayant une motorisation hybride ou électrique.

14. Utilisation d'un pneumatique (11) selon la revendication 12 ou 13, pour que le pneumatique (11) soit gonflé à une pression allant de 200 à 270 kPa.

15. Véhicule de tourisme comprenant au moins un pneumatique (11) selon l'une quelconque des revendications 1 à 11, véhicule de tourisme de préférence ayant une motorisation électrique ou hybride.

## Patentansprüche

1. Reifen (11) für einen Personenkraftwagen, welcher einen Scheitel (12), zwei Wülste (32), zwei Seitenwände (30), die jeweils einen jeweiligen Wulst (32) mit dem Scheitel (12) verbinden, und eine in jedem Wulst (32) verankerte Karkassenbewehrung (34) umfasst, wobei der Scheitel (12) eine Scheitelbewehrung (16) und einen Laufstreifen (14) umfasst, wobei sich die Karkassenbewehrung (34) in jeder Seitenwand (30) und im Scheitel (12) radial innerhalb der Scheitelbewehrung (16) erstreckt, wobei die Scheitelbewehrung (16) radial zwischen dem Laufstreifen (14) und der Karkassenbewehrung (34) angeordnet ist und eine Arbeitsbewehrung (20) umfasst, die mindestens eine axial am wenigsten breite Arbeitsschicht (26) umfasst, wobei die axial am wenigsten breite Arbeitsschicht (26) eine axiale Breite T2, ausgedrückt in mm, aufweist,
wobei der Reifen (11) geeignet ist, auf einem Montageträger (100) montiert zu werden, der eine Felge (200) umfasst, **dadurch gekennzeichnet, dass** der Reifen (11) einen solchen Tragfähigkeitsindex LI aufweist, dass LI ≥ LI'+1 ist, wobei LI' der Tragfähigkeitsindex eines dieselbe Abmessung aufweisenden EXTRA LOAD-Reifens gemäß dem Handbuch der Norm ETRTO 2019 ist, und dadurch, dass, wenn der Reifen auf einer Felge montiert ist, die einen Felgenbreitencode aufweist, der gleich dem Breitencode der Messfelge für die Abmessung des Reifens ist und gemäß dem Handbuch der Norm ETRTO 2019 definiert ist, verringert um 0,5, für das Verhältnis T2/A gilt, dass T2/A ≤ 1,00 ist, wobei A die Felgenbreite A gemäß dem Handbuch der Norm ETRTO 2019, ausgedrückt in mm, der Felge ist.

2. Reifen (11) nach dem vorhergehenden Anspruch, wobei LI'+1 ≤ LI ≤ LI'+4, vorzugsweise LI'+2 ≤ LI ≤ LI'+4 ist.

3. Reifen (11) nach einem der vorhergehenden Ansprüche, wobei 0,85 ≤ T2/A, vorzugsweise 0,90 ≤ T2/A und stärker bevorzugt 0,93 ≤ T2/A ≤ 0,97 ist.

4. Reifen (11) nach einem der vorhergehenden Ansprüche, wobei der Reifen (11) eine solche Nennquerschnittsbreite SW aufweist, dass T2 ≥ SW - 75, vorzugsweise T2 ≥ SW - 70 ist.

5. Reifen (11) nach einem der vorhergehenden Ansprüche, wobei der Reifen (11) eine solche Nennquerschnittsbreite SW aufweist, dass T2 ≤ SW - 27, vorzugsweise T2 ≤ SW - 30 ist.

6. Reifen (11) nach einem der vorhergehenden Ansprüche, wobei der Reifen (11) eine Nennquerschnittsbreite SW von 205 bis 315, ein Nennquerschnittsverhältnis von 25 bis 55, einen Felgennenndurchmesser von 17 bis 23 und einen Tragfähigkeitsindex LI von 98 bis 116 aufweist, vorzugsweise eine Nennquerschnittsbreite SW von 225 bis 315, ein Nennquerschnittsverhältnis von 25 bis 55, einen Felgennenndurchmesser von 18 bis 23 und einen Tragfähigkeitsindex LI von 98 bis 116 und stärker bevorzugt eine Nennquerschnittsbreite SW von 245 bis 315, ein Nennquerschnittsverhältnis von 30 bis 45, einen Felgennenndurchmesser von 18 bis 23 und einen Tragfähigkeitsindex LI von 98 bis 116.

7. Reifen (11) nach einem der vorhergehenden Ansprüche, wobei der Reifen (11) eine Abmessung und einen Tragfähigkeitsindex LI aufweist, die aus den folgenden Abmessungen und Tragfähigkeitsindizes ausgewählt sind: 225/55R18 105, 225/55ZR18 105, 205/55R19 100, 205/55ZR19 100, 235/45R21 104, 235/45ZR21 104, 285/45R22 116, 285/45ZR22 116, 205/40R17 88, 205/40ZR17 88, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 275/35R21 105, 275/35ZR21 105, 285/35R21 108, 285/35ZR21 108, 295/35R22 111, 295/35ZR22 111, 275/35R23 108, 275/35ZR23 108, 285/30R21 103, 285/30ZR21 103, 315/30R21 109, 315/30ZR21 109, 325/30R21 111, 325/30ZR21 111, 315/30R23 111, 315/30ZR23 111.

8. Reifen (11) nach einem der vorhergehenden Ansprüche, wobei die Arbeitsbewehrung (20) eine radial innere Arbeitsschicht (24) und eine radial äußere Arbeitsschicht (26), die radial außerhalb der radial inneren Arbeitsschicht (24) angeordnet ist, umfasst.

9. Reifen (11) nach einem der vorhergehenden Ansprüche, wobei die axial am wenigsten breite Arbeitsschicht (26) oder jede Arbeitsschicht (24, 26) axial von zwei axialen Rändern (241, 242, 261, 262) der Arbeitsschicht (24, 26) begrenzt wird und fadenförmige Arbeitsverstärkungselemente, die sich axial von einem axialen Rand zum anderen axialen Rand der Arbeitsschicht (24, 26) erstrecken, umfasst, die im Wesentlichen parallel zueinander sind.

10. Reifen (11) nach dem vorhergehenden Anspruch, wobei jedes fadenförmige Arbeitsverstärkungselement sich entlang einer Hauptrichtung erstreckt, die mit der Umfangsrichtung (X) des Reifens (11) einen Winkel bildet, der dem absoluten Betrag nach streng größer als 10° ist, vorzugsweise zwischen 15° und 50° und stärker bevorzugt zwischen 20° und 35° liegt.

11. Reifen (11) nach einem der vorhergehenden Ansprüche, wobei die Karkassenbewehrung (34) mindestens eine Karkassenschicht (36, 37) umfasst, wobei die oder jede Karkassenschicht (36, 37) axial von zwei axialen Rändern (361, 362, 371, 372) der oder jeder Karkassenschicht (36, 37) begrenzt wird und textile fadenförmige Karkassenverstärkungselemente (360, 370) umfasst, die sich axial von einem axialen Rand zum anderen axialen Rand der oder jeder Karkassenschicht (36, 37) entlang einer Hauptrichtung erstrecken, die mit der Umfangsrichtung (X) des Reifens (11) einen Winkel bildet, der dem absoluten Betrag nach zwischen 80° und 90° liegt.

12. Verwendung eines Reifens (11) für einen Personenkraftwagen, der einen Scheitel (12), zwei Wülste (32), zwei Seitenwände (30), die jeweils einen jeweiligen Wulst (32) mit dem Scheitel (12) verbinden, und eine in jedem Wulst (32) verankerte Karkassenbewehrung (34) umfasst, wobei der Scheitel (12) eine Scheitelbewehrung (16) und einen Laufstreifen (14) umfasst, wobei sich die Karkassenbewehrung (34) in jeder Seitenwand (30) und im Scheitel (12) radial innerhalb der Scheitelbewehrung (16) erstreckt, wobei die Scheitelbewehrung (16) radial zwischen dem Laufstreifen (14) und der Karkassenbewehrung (34) angeordnet ist und eine Arbeitsbewehrung (20) umfasst, die mindestens eine axial am wenigsten breite Arbeitsschicht (26) umfasst, wobei die axial am wenigsten breite Arbeitsschicht (26) eine axiale Breite T2, ausgedrückt in mm, aufweist,
auf einem Montageträger (100), der eine Felge (200) umfasst, so dass, wenn der Reifen auf einer Felge montiert ist, die einen Felgenbreitencode aufweist, der gleich dem Breitencode der Messfelge für die Abmessung des Reifens ist und gemäß dem Handbuch der Norm ETRTO 2019 definiert ist, verringert um 0,5, für das Verhältnis T2/A gilt, dass T2/A ≤ 1,00 ist, wobei A die Felgenbreite A gemäß dem Handbuch der Norm ETRTO 2019, ausgedrückt in mm, der Felge ist, damit der Reifen (11) einen solchen Tragfähigkeitsindex LI aufweist, dass LI ≥ LI'+1 ist, wobei LI' der Tragfähigkeitsindex eines dieselbe Abmessung aufweisenden EXTRA LOAD-Reifens gemäß dem Handbuch der Norm ETRTO 2019 ist.

13. Verwendung eines Reifens (11) nach dem vorhergehenden Anspruch, damit der Reifen (11) an einem Fahrzeug angebracht wird, das eine Hybridmotorisierung oder elektrische Motorisierung aufweist.

14. Verwendung eines Reifens (11) nach Anspruch 12 oder 13, damit der Reifen (11) auf einen Druck von 200 bis 270 kPa aufgepumpt wird.

15. Personenkraftwagen, der mindestens einen Reifen (11) nach einem der Ansprüche 1 bis 11 umfasst, wobei der Personenkraftwagen vorzugsweise eine elektrische oder Hybridmotorisierung aufweist.

## Claims

1. A tyre (11) for a passenger vehicle comprising a crown (12), two beads (32), two sidewalls (30) each connecting each bead (32) to the crown (12), and a carcass reinforcement (34) anchored in each bead (32), the crown (12) comprising a crown reinforcement (16) and a tread (14), the carcass reinforcement (34) extending in each sidewall (30) and in the crown (12) radially internally to the crown reinforcement (16), the crown reinforcement (16) being arranged radially between the tread (14) and the carcass reinforcement (34) and comprising a working reinforcement (20) comprising at least an axially narrowest working layer (26), the axially narrowest working layer (26) having an axial width T2 expressed in mm,
the tyre (11) is adapted to be mounted on a mounting support (100) comprising a rim (200), **characterized in that** the tyre (11) has a load index LI such that LI ≥ LI'+1, LI' being the load index of an EXTRA LOAD tyre of the same size according to the ETRTO 2019 Standards Manual, and **in that,** when the tyre is mounted on a rim having a rim width code equal to the measuring rim width code for the tyre size defined according to the ETRTO 2019 Standards Manual minus 0.5, the ratio T2/A is such that T2/A ≤ 1.00 with A being the rim width A according to the ETRTO 2019 Standards Manual, expressed in mm of the rim.

2. The tyre (11) as claimed in the preceding claim, wherein LI'+1 ≤ LI ≤ LI'+4, preferably LI'+2 ≤ LI ≤ LI'+4.

3. The tyre (11) as claimed in any one of the preceding claims, wherein 0.85 ≤ T2/A, preferably 0.90 ≤ T2/A, and more preferentially 0.93 ≤ T2/A ≤ 0.97.

4. The tyre (11) as claimed in any one of the preceding claims, wherein the tyre (11) has a nominal section width SW such that T2 ≥ SW - 75, preferably T2 ≥ SW - 70.

5. The tyre (11) as claimed in any one of the preceding claims, wherein the tyre (11) has a nominal section width SW such that T2 ≤ SW - 27, preferably T2 ≤ SW - 30.

6. The tyre (11) as claimed in any one of the preceding claims, wherein the tyre (11) has a nominal section width SW ranging from 205 to 315, a nominal aspect ratio ranging from 25 to 55, a nominal rim diameter ranging from 17 to 23 and a load index LI ranging from 98 to 116, preferably a nominal section width SW ranging from 225 to 315, a nominal aspect ratio ranging from 25 to 55, a nominal rim diameter ranging from 18 to 23 and a load index LI ranging from 98 to 116, and more preferentially a nominal section width SW ranging from 245 to 315, a nominal aspect ratio ranging from 30 to 45, a nominal rim diameter ranging from 18 to 23 and a load index LI ranging from 98 to 116.

7. The tyre (11) as claimed in any one of the preceding claims, wherein the tyre (11) has a size and a load index LI chosen from among the following sizes and load indexes: 225/55R18 105, 225/55ZR18 105, 205/55R19 100, 205/55ZR19 100, 235/45R21 104, 235/45ZR21 104, 285/45R22 116, 285/45ZR22 116, 205/40R17 88, 205/40ZR17 88, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 255/35R18 98, 255/35ZR18 98, 245/35R20 98, 245/35ZR20 98, 265/35R20 102, 265/35ZR20 102, 245/35R21 99, 245/35ZR21 99, 255/35R21 101, 255/35ZR21 101, 265/35R21 103, 265/35ZR21 103, 275/35R21 105, 275/35ZR21 105, 285/35R21 108, 285/35ZR21 108, 295/35R22 111, 295/35ZR22 111, 275/35R23 108, 275/35ZR23 108, 285/30R21 103, 285/30ZR21 103, 315/30R21 109, 315/30ZR21 109, 325/30R21 111, 325/30ZR21 111, 315/30R23 111, 315/30ZR23 111.

8. The tyre (11) as claimed in any one of the preceding claims, wherein the working reinforcement (20) comprises a radially inner working layer (24) and a radially outer working layer (26) arranged radially on the outside of the radially inner working layer (24).

9. The tyre (11) as claimed in any one of the preceding claims, wherein the axially narrowest working layer (26) or each working layer (24, 26) is delimited axially by two axial edges (241, 242, 261, 262) of said working layer (24, 26) and comprises working filamentary reinforcing elements extending axially from one axial edge to the other axial edge of said working layer (24, 26) substantially parallel to one another.

10. The tyre (11) as claimed in the preceding claim, each working filamentary reinforcing element extends in a main direction forming an angle which, in terms of absolute value, is strictly greater than 10°, preferably ranging from 15° to 50° and more preferentially ranging from 20° to 35°, with the circumferential direction (X) of the tyre (11).

11. The tyre (11) as claimed in any one of the preceding claims, wherein the carcass reinforcement (34) comprises at least one carcass layer (36, 37), the or each carcass layer (36, 37) being delimited axially by two axial edges (361, 362, 371, 372) of the or each carcass layer (36, 37) and comprises textile carcass filamentary reinforcing elements (360, 370) extending axially from one axial edge to the other axial edge of the or each carcass layer (36, 37) in a main direction forming an angle which, in terms of absolute value, ranges from 80° to 90°, with the circumferential direction (X) of the tyre (11).

12. Use of a tyre (11) for passenger vehicle comprising a crown (12), two beads (32), two sidewalls (30) each connecting each bead (32) to the crown (12), and a carcass reinforcement (34) anchored in each bead (32), the crown (12) comprising a crown reinforcement (16) and a tread (14), the carcass reinforcement (34) extending in each sidewall (30) and in the crown (12) radially internally to the crown reinforcement (16), the crown reinforcement (16) being arranged radially between the tread (14) and the carcass reinforcement (34) and comprising a working reinforcement (20) comprising at least an axially narrowest working layer (26), the axially narrowest working layer (26) having an axial width T2 expressed in mm,
on a mounting support (100) comprising a rim (200) so that, when the tyre is mounted on a rim having a rim width code equal to the measuring rim width code for the tyre size defined according to the ETRTO 2019 Standards Manual minus 0.5, the ratio T2/A is such that T2/A ≤ 1.00 with A being the rim width A according to the ETRTO 2019 Standards Manual, expressed in mm of the rim, so that the tyre (11) has a load index LI such that LI ≥ LI'+1, LI' being the load index of an EXTRA LOAD tyre of the same size according to the ETRTO 2019 Standards Manual.

13. Use of a tyre (11) according to the preceding claim, so that the tyre (11) is mounted on a vehicle having an hybrid or electric motor.

14. Use of a tyre (11) according to claim 12 or 13, so that the tyre (11) is inflated at a pressure ranging from 200 to 270 kPa.

15. Passenger vehicle comprising at least one tyre (11) as claimed in any one of the claims 1 to 11, passenger vehicle having an hybrid or electric motor.
